# DEMANDE DE BREVET EUROPEEN

(11) **EP 1 375 947 A1**
(43) Date de publication de la demande: **02.01.2004**
(21) Numéro de dépôt: 03291581.1
(22) Date de dépôt: 27.06.2003
(51) Int. Cl.: F16D 25/08

(54) **Dispositif de commande hydraulique d'embrayage**

(30) Priorité: 28.06.2002 FR 0208059
(71) Demandeur: Renault s.a.s., 92100 Boulogne Billancourt (FR)
(72) Inventeur: Chouchana, Richard, 92220 Bagneux (FR)
(74) Mandataire: Rougemont, Bernard

(57) **Abrégé**

Dispositif de commande hydraulique d'embrayage comportant un tube cylindrique fixe (10) monté autour de l'arbre d'embrayage, un manchon extérieur (11) solidaire du tube (10) définissant avec celui-ci une cavité annulaire (14) propre à être alimentée en fluide de pression, un piston concentrique (9a, 9b) constitué de deux parties (9a, 9b) disposées de part et d'autre d'un élément d'amortissement des vibrations (16). et coulissant dans la cavité annulaire, et un conduit d'arrivée d'huile de pression (3) raccordé au circuit hydraulique de la transmission débouchant dans celle-ci de façon à repousser le piston contre le diaphragme de l'embrayage , caractérisé en ce que le raccordement du conduit (3) au circuit hydraulique de la transmission s'effectue au moyen d'une pipette (18) réglable en longueur.

## Description

La présente invention se rapporte à la commande des embrayages de véhicule automobile.

Plus précisément, elle concerne les commandes d'embrayage hydrauliques concentriques, du type comportant un tube cylindrique fixe monté autour de l'arbre d'embrayage, un manchon extérieur solidaire du tube définissant avec celui-ci une cavité annulaire propre à être alimentée en fluide de pression, un piston concentrique coulissant dans la cavité annulaire, et un conduit d'arrivée d'huile de pression débouchant dans celle-ci de façon à repousser les becs de diaphragme d'embrayage pour libérer le plateau de pression et la friction.

Cette invention s'applique à la commande d'un embrayage à plateau de pression, diaphragme et disque de friction, avec ou sans rattrapage de jeu, associé ou non à un double volant amortisseur.

bans un embrayage conventionnel, le plateau de pression est repoussé de façon élastique contre le volant moteur par le diaphragme, de façon à serrer une garniture de friction entre ces deux éléments en position embrayée. L'opération de débrayage consistant à dégager le plateau volant, est commandée par câble, ou de façon hydraulique.

Une commande hydraulique d'embrayage particulière, dite commande concentrique hydraulique *(C.S.C* ou « concentric slave cylinder») illustrée par la publication FR 2757 590, comporte une partie fixe comprenant un tube guide interne et un corps extérieur concentrique définissant une cavité annulaire propre à être alimentée en fluide, à l'intérieur de laquelle est monté un piston mobile axialement, portant un élément d'attaque propre à repousser les becs du diaphragme.

Étant donné que l'emplacement disponible dans le carter d'embrayage pour la commande et ses moyens de raccordement au circuit hydraulique, varie selon les architectures de transmission, les moyens de raccordement particulier, la pipette assurant le raccordement du conduit au circuit doivent être adaptés à l'environnement.

Pour résoudre ce problème de raccordement, tout en bénéficiant d'une standardisation des pipettes, l'invention prévoit de n'utiliser qu'un seul modèle de pipette réglable en longueur.

D'autres caractéristiques et avantages de l'invention apparaîtront clairement à la lecture de la description suivante d'un mode de réalisation particulier de celle-ci, en liaison avec les dessins annexés sur lesquels :
- la figure 1 montre l'implantation de la commande concernée dans le carter d'embrayage,
- les figures 2A et 2B montrent deux coupes partielles orthogonales du dispositif de commande proposé,
- les figures 3A et 3B illustrent le montage de la pipette d'arrivée d'huile, et
- la figures 4 montre les moyens de protection de celle-ci.

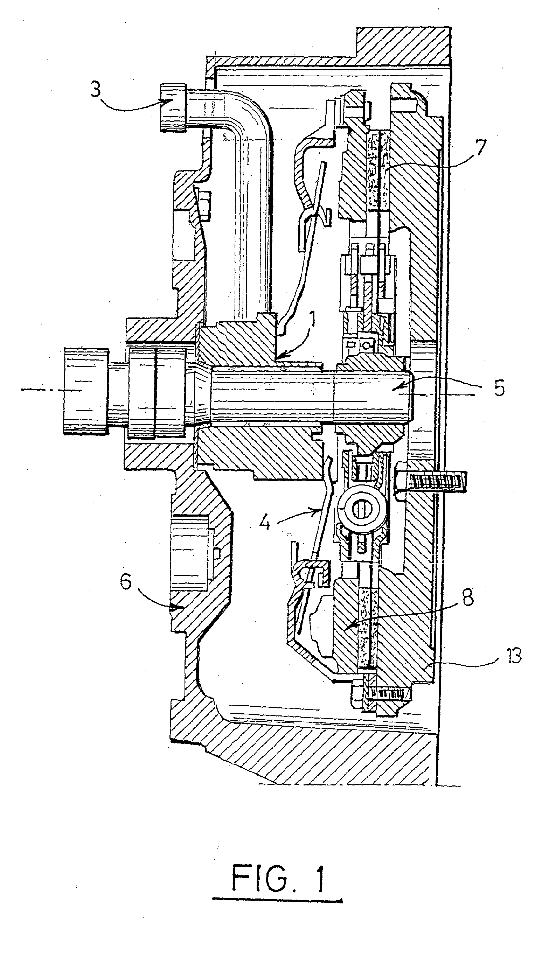

Le mécanisme d'embrayage illustré par la figure 1 est associé à un volant moteur 13. Il est monté autour d'un arbre primaire de transmission 5, et logé dans un carter 6. De façon classique, il comporte un plateau de pression 8, des garnitures de friction 7, et un diaphragme 4. Cet embrayage est représenté en position embrayée, dans laquelle le diaphragme repousse élastiquement le plateau de pression contre le volant moteur, en serrant les garnitures de friction.

Le dispositif de commande d'embrayage 1 est monté autour de l'arbre 5 Ce dispositif est du type concentrique hydraulique. Pour débrayer, il est soumis à une pression hydraulique, qui lui permet de repousser les becs du diaphragme de façon à dégager le plateau du volant moteur.

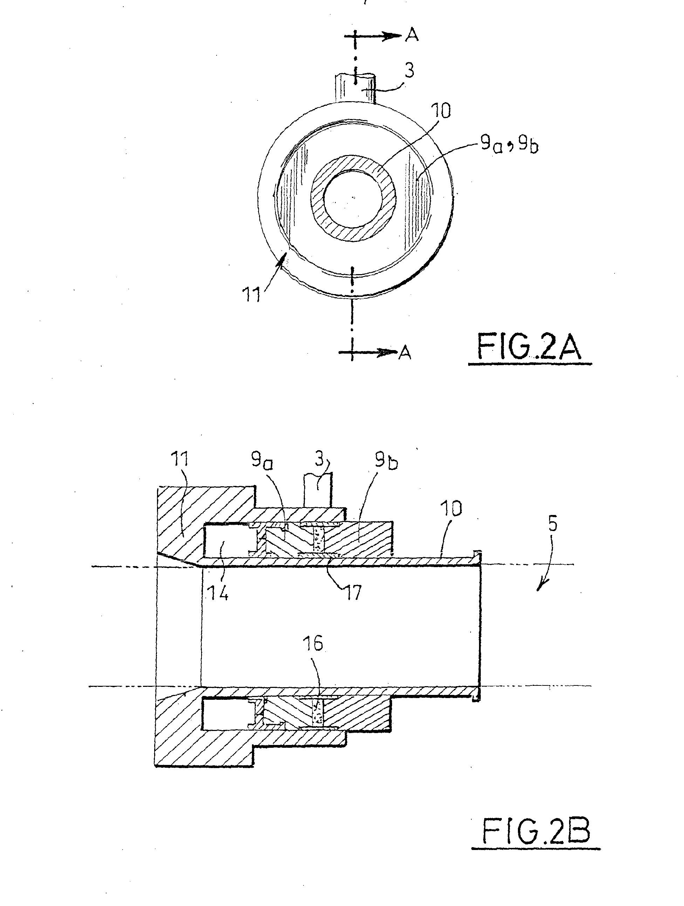

En se reportant aux figures 2A et 2B, on voit qu'il comprend un tube cylindrique fixe 10 monté autour de l'arbre d'embrayage 5, et un manchon extérieur 11 solidaire de celui-ci. Le tube 10 et le manchon 11 définissent une cavité annulaire 14 . Cette cavité est alimentée en fluide de pression, par le conduit d'arrivée 3. Un piston concentrique 9a, 9b coulisse dans la cavité 14 vers la droite de la figure 2B, sous l'action de la pression d'huile, de façon à repousser le piston 9a, 9b contre les becs du diaphragme 4.

Comme indiqué plus haut, les commandes d'embrayage concentriques hydrauliques sont sensibles aux remontées vibratoires du groupe motopropulseur. Pour résoudre ce problème, l'invention propose de scinder le piston en deux, et d'interposer entre ces deux parties un élément d'amortissement des vibrations, par exemple en matériau élastomère. Conformément à l'invention, le piston est donc constitué de deux parties 9a, 9b, disposées de part et d'autre d'un élément d'amortissement des vibrations 16 , tel qu'un « silent-block ». Comme indiqué sur la figure 2B, l'élément 16 s'étend de préférence sur toute la largeur du piston. Pour éviter que l'élément élastomère ne flue entre le piston et les parois de la cavité lors de son déplacement, il est préférable qu'il ne soit pas en contact avec le manchon 11. Dans ce but, l'invention prévoit que le piston soit entouré par un tube de guidage 17 au niveau de l'élément d'amortissement 16.

La disposition d'un élément intermédiaire d'amortissement au sein du piston permet non seulement d'atténuer les vibrations transmises par la commande d'embrayage, mais également d'augmenter ou de diminuer la raideur de celle-ci en fonction de la dureté du matériau employé. Le choix de l'élément d'amortissement 17, permet donc de jouer sur la raideur de la commande, notamment pour adapter celle-ci à différentes configurations de transmission, sans renoncer à la standardisation des autres composants tels que le tube, le manchon ou le conduit d'arrivée d'huile.

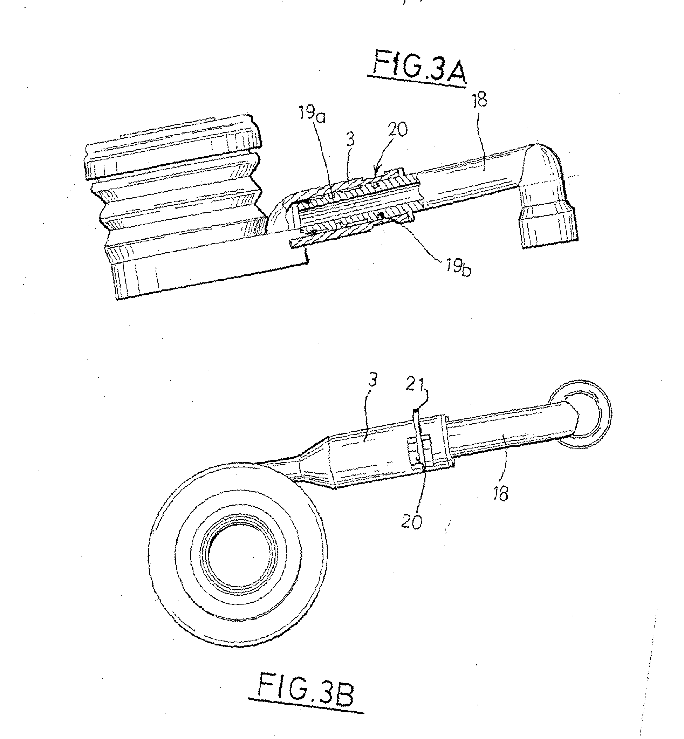

En se reportant aux figures 3A, 38, on voit que la pipette 18 proposée présente au moins deux gorges d'arrêt 19a, 19b dans le conduit 3 (cf. figure 3A). Le positionnement de l'une ou l'autre des gorges 19a, 19b au niveau de la rainure 20 du conduit 3, lors de la mise en place de l'agrafe 21 dans celle-ci, permet d'adapter la longueur de la pipette 18 à son environnement, sans renoncer à sa standardisation ni à celle du conduit.

Grâce aux différentes positions de montage de la pipette dans le conduit, il est donc possible d'utiliser le même dispositif de commande hydraulique et la même pipette de raccordement, dans différentes transmissions.

Une fois montée dans le conduit avec la longueur souhaitée, la pipette pose toutefois un problème particulier de protection de la commande avant son raccordement au circuit hydraulique de la transmission. En effet, les commandes concentriques hydrauliques sont particulièrement sensibles aux limailles et aux poussières, et l'ouverture de la pipette opposée au conduit doit être protégée.

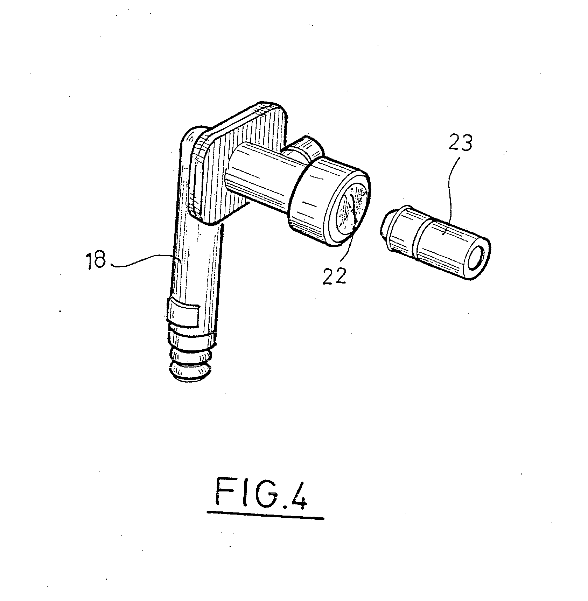

Pour protéger la commande avant son raccordement au circuit, on place habituellement sur l'ouverture de la pipette un bouchon de protection. Les inconvénients de ces bouchons sont leur encombrement, les risques de perte pendant le transport, et l'intervention requise pour les retirer. Pour pouvoir se passer des bouchons, l'invention propose de les remplacer par un film 22 déchirable. On place donc initialement sur la pipette un film déchirable 22 (cf. figure 4), percé par le tuyau d'alimentation d'huile 23 du circuit hydraulique de la transmission, lors de son raccordement à celui-ci.

Le film 22 est de préférence affaibli par un découpage partiel facilitant sa déchirure lors du perçage. Comme indiqué sur la figure 4, on choisira de préférence un découpage partiel en forme de croix, pour faciliter le rabattage latéral du film lors de l'introduction du tuyau 23 dans la pipette 18.

## Revendications

1. Dispositif de commande hydraulique d'embrayage comportant un tube cylindrique fixe (10) monté autour de l'arbre d'embrayage, un manchon extérieur (11) solidaire du tube (10) définissant avec celui-ci une cavité annulaire (14) propre à être alimentée en fluide de pression, un piston concentrique (9a, 9b) constitué de deux parties (9a, 9b) disposées de part et d'autre d'un élément d'amortissement des vibrations (16). et coulissant dans la cavité annulaire, et un conduit d'arrivée d'huile de pression (3) raccordé au circuit hydraulique de la transmission débouchant dans celle-ci de façon à repousser le piston contre le diaphragme de l'embrayage , **caractérisé en ce que** le raccordement du conduit (3) au circuit hydraulique de la transmission s'effectue au moyen d'une pipette (18) réglable en longueur.

2. Dispositif d'amortissement selon la revendication 1 **caractérisé en ce que** la pipette (18) dispose de plusieurs positions de montage dans le conduit (3).

3. Dispositif d'amortissement selon la revendication 1 ou 2 **caractérisé en ce que** la pipette (18) présente au moins deux gorges de positionnement (19a, 19b) à l'intérieur du conduit (3).

4. Dispositif de commande selon la revendication 1 ou 2 ou 3**caractérisé en ce que** la pipette (18) présente initialement un film (22) déchiré, par le tuyau d'alimentation d'huile (23) du dispositif lors de son raccordement à celui-ci.

5. Dispositif de commande selon la revendication 4 **caractérisé en ce que** la le film (22) est affaibli par un découpage partiel.

6. Dispositif de commande selon la revendication 5 **caractérisé en ce que** le découpage partiel est en forme de croix.
